Europäisches Patentamt

European Patent Office

Office européen des brevets

(11) Publication number: **0 355 822 B1**

# EUROPEAN PATENT SPECIFICATION

(45) Date of publication of patent specification: **16.12.92**

(51) Int. Cl.⁵: **B60C 9/00**, B60C 9/02, B60C 9/20

(21) Application number: **89115591.3**

(22) Date of filing: **23.08.89**

(54) Tire with nylon-polyester composite reinforcement cords.

(30) Priority: **24.08.88 JP 210339/88**

(43) Date of publication of application:
**28.02.90 Bulletin 90/09**

(45) Publication of the grant of the patent:
**16.12.92 Bulletin 92/51**

(84) Designated Contracting States:
**DE FR GB**

(56) References cited:
**FR-A- 2 212 243**
**GB-A- 1 165 853**
**GB-A- 1 205 281**
**NL-A- 6 512 920**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Kawamura, Kazuhiko**
**No. 1-45, Suigen-cho 3-chome**
**Toyota-shi Aichi(JP)**
Inventor: **Suzuki, Koji**
**No. 49-9, Shinei Shinden-cho**
**Anjyo-shi Aichi(JP)**
Inventor: **Nakayasu, Rituo**
**No. 27-2. Aoki-cho 1-chome**
**Toyota-shi Aichi(JP)**
Inventor: **Hasegawa, Shigehiro**
**No. 232-3, Fukusato Futami-cho**
**Akashi-shi Hyogo(JP)**

(74) Representative: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

## Description

### BACKGROUND OF THE INVENTION

Cords in the fiber reinforcement layer of tires have been made of various materials including nylon, polyester, steel, aromatic polyamide and glass fiber. Because of their high strength and elastic modulus, steel cords have been favored in such areas as the carcass and belt of large radial truck and bus tires and the belt of radial passenger car tires. Since steel cords increase the tire weight, organic fiber cords have been commonly used in the carcass of passenger car tires and two-wheeled motorcycle tires that do not require particularly strength. Organic fiber cords also find predominant use in air plane tires that will undergo large deformation upon landing and that hence require high elongation, as well as in tires having large bias angles between their plies.

The greater part of the use of organic fiber cords is of nylon and polyester. Nylon has good adhesion to rubber and is particularly resistant to deterioration under high-temperature conditions. Because of these features, nylon cords are commonly used in the carcass and belt of large truck and bus tires and airplane tires which are to be used under high load. In particular, nylon-6,6 which is highly stable under high temperatures is favored for use in the reinforcement layer of belts which will experience extensive temperature elevation and in airplane tires. However, nylon cords are highly susceptible to creep and when used in tires, various disadvantages will occur, such as lack of dimensional stability, high sensitivity to flatspotting, and too low a rigidity to provide high dynamic performance. Therefore, nylon cords have been unsuitable for use in the carcass and belt of radial tires.

Polyester cords do not have any of these defects of nylon cords and exhibit higher elastic modulus than nylon cords. Thus, polyester cords are used in the carcass of most of the radial passenger car tires manufactured today. However, compared to nylon cords, polyester cords are susceptible to thermal deterioration and their adhesion to rubber is not high at elevated temperatures. Thus, polyester cords are not best suited for use in large truck and bus tires and airplane tires and are subject to extensive constraint by cure conditions and rubber compounding.

### FIELD OF THE INVENTION

The present invention relates to a tire having improved endurance and dynamic performance by virtue of improvements in the properties of organic fiber cords in a tire reinforcement layer, such as good cord-to-rubber adhesion and high cord stiffness or rigidity.

As described above, nylon and polyester cords have been used in different areas according to the characteristic exhibited by the respective materials. Generally speaking, nylon cords are used in areas where endurance is of primary importance, and polyester cords find predominant use in areas where dynamic performance including such aspects as maneuverability and quietness is considered to be more important under comparatively mild load conditions.

As the requirements for better tire performance have become increasingly rigorous these days, tires to be used in each category desirably possess the characteristics of the two types of cords, nylon and polyester. Several examples are given below to illustrate the situation.

1. Compared to radial tires, bias tires for heavy and light trucks and buses have low rigidity at the tread portion and hence cause great noise by air pumping of the tread pattern. Polyester cords used as the carcass material are effective in noise reduction but they are difficult to use for the reasons already described.

2. Racing tires are used at speeds of 200 - 300 km/h and higher and generate great heat, thus necessitating the use of nylon cords as the carcass material. As the tire temperature increases, the modulus of the nylon cord temperature increases, the modulus of the nylon cord changes to reduce stability during maneuvering. Stability in maneuvering can be improved by using polyester cords but separation might occur on account of the lack of adhesion at elevated temperatures.

3. In radial tires for high-performance passenger cars, a band layer made of organic fiber cords is placed radially outward of the belt in order to prevent belt lifting at high speed. Since this cord becomes hot during use, nylon is used as a cord material for the reason already stated. However, tire uniformity might deteriorate if the joint area were deformed on account of thermal shrinkage of the nylon cord during tire curing. Polyester cords will experience smaller thermal shrinkage and have larger elastic modulus, so they are desirable for use in the band because high-speed endurance can be improved without deterioration tire uniformity. In fact, however, polyester cords are not usable because of low adhesion to rubber at high temperatures.

4. In some large radial tires for trucks and buses, an organic fiber cord layer is placed as a reinforcement of the bead portion. The bead portion of such tires becomes very hot because of heat transfer through the rim on the brake drum and on account of heat generation from the cyclic bending of the bead portion, and this necessitates the use of nylon cords. For better reinforcement, nylon cords of higher elastic modulus are desirable. Although aromatic polyamides have sometimes been used, they are prone to failure under compression. As already mentioned, polyester cords have higher elastic modulus than nylon cords but they are not suitable for practical use since the adhesion to rubber has a tendency to fail at elevated temperatures.

An object, therefore, of the present invention is to provide a tire that is improved not only in reinforcement but also in endurance by using in a reinforcement layer those organic fiber cords which exhibit the advantages of both nylon and polyester. GB-A-1165 853 describes a tire for a motor vehicle comprising a plurality of filaments, wherein each filament comprises a core formed of polyester and a sheath formed of nylon, the weight ratio of the polyester in the core to the nylon in the sheath being in the range of from 30:70 to 60:40. The teaching of this document lacks any twist coefficient. In EP-A-0331501 (priority : 03.03.88, publication : 06.09.89 and cited under Article 54(3) EPC) is disclosed a tire for a motor vehicle wheel comprising at least a pair of beads, a carcass therebetween and a tread portion on the outer periphery of the carcass, the carcass comprising a plurality of tire cords, each tire cord comprising a plurality of filaments, wherein each filament comprises a core formed of polyester and a sheath formed of nylon, the weight ratio of the polyester in the core to the nylon in the sheath being in the range of from 45:55 to 55:45, the filaments being twisted into the cords, each cord having a twist coefficient NT within the range of 0.20 - 0.60 satisfying the relationship:

$$NT = N \times \sqrt{0.139 \times \tfrac{1}{2}D / \rho} \times 10^{-3}$$

where

$N$ = number of twists/10 cm

$D$ = total denier of the cord; and

$\rho$ = the specific gravity of the cord.

## SUMMARY OF THE INVENTION

In order to attain this object, the tire of the present invention comprises the features of independent claim 1 or 4.

Other objects and advantages of the invention will become apparent upon review of the following description and drawings in which:

## BRIEF DESCRIPTION OF THE DRAWINGS

Figure 1 is a radial sectional view of a tire showing typical positioning of the reinforcing components;

Figure 2 is a diagrammatic perspective view of a composite organic fiber reinforcement cord having a nylon skin and a polyester core; and

Figure 3 is a perspective view of an organic fiber cord layer.

## DETAILED DESCRIPTION OF THE PREFERRED EMBODIMENTS

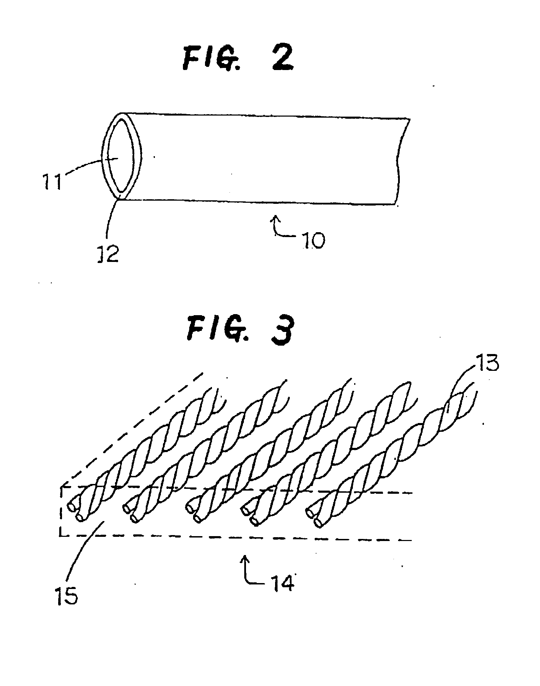

Before embarking upon a detailed description, as a matter of definition, it should be noted that through this discussion the term "organic fiber filaments having a skin-structure" means those organic fiber filaments which are composed of the central portion (core portion) and the surface portion (skin portion), the two portions being made of different materials. Figure 2 is a schematic representation of an individual organic fiber filament. As shown, the organic fiber filament generally indicated at 10 is composed of the core 11 and the skin 12. In the present invention, the core 11 is made of a polyester and the skin 12 is made of a nylon. Any type of nylon may be used by aliphatic nylons of m n type or n type are desired. Particularly advantageous is nylon-6,6 for its great strength at elevated temperatures and due to its high melting point.

The skin covers the core in the form of a sheath surrounding each filament. Therefore the outer surface of the filaments are composed of nylon and, of course, a group of filaments twisted together would also have a nylon skin. This skin contributes to the adhesion to rubber.

The filaments are produced according to the method disclosed in Japanese Unexamined Application Publication 49-85315. In this method it is disclosed that the filament includes a skin portion made of polyamide (nylon) having a molecular weight not less than 20,000, and the core portion is made of a polyester having a molecular weight not less than 20,000; the entire disclosure of this publication is hereby incorporated by reference. Further, oil which is substantially free of water is supplied to the filament thus made. After that, the produced filament is subjected to a drawing process without hygroscope processing.

The weight ratio of core portion to the filament is within the range of 30%-90%. If the ratio is less than 30%, it is impossible to obtain the virtues of the polyester experiencing smaller thermal shrinkage and having a larger elastic module. On the other hand, if the ratio is more than 90%, the core portion may be exposed and not completely covered by the skin portion, because the skin portion becomes too thin.

The proportion of the organic fiber filament 10 that is taken by the core 11 is desirably set at such a value that the characteristics, such as elasticity and strength, of the filament will be governed by the constituent material of the core. As will be described below, the skin 12 of the filament is a factor that influences adhesion to rubber.

A plurality of such organic fiber filaments, say, several tens to hundreds of filaments, are bundled together to form a cord by a conventional method.

As shown in Figure 3, a plurality of strands each consisting of two cords 13 twisted together are arranged parallel to one another and embedded in a rubber layer 15 to fabricate a cord layer 14. During tire curing, the cords 13 will adhere to the rubber through chemical bonding, in which the skin 12 of the organic fiber filament 10 takes some part.

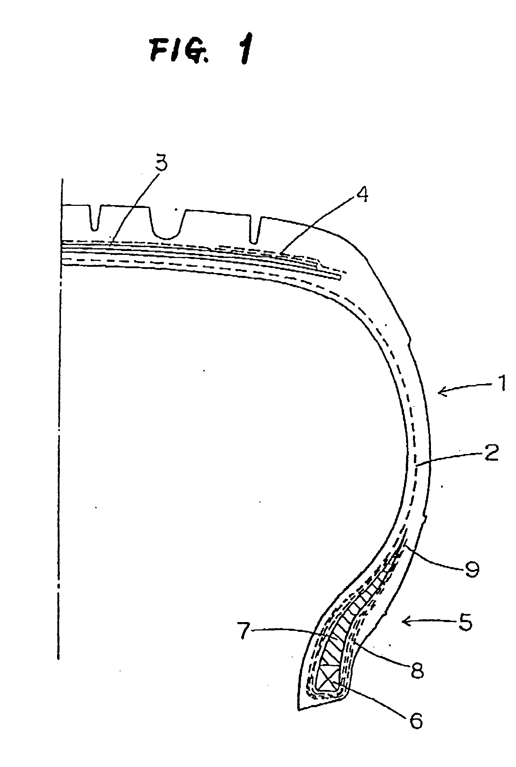

Figure 1 is a radial section of an exemplary tire construction, which shows the half of the tire rightward of its equatorial plane. The tire generally indicated at 1 includes the carcass 2, belt 3, band 4, chafer 8 and filler 9 as its reinforcement layers. The carcass 2 extends through the tread portion and sidewall portion and is engaged by a pair of bead cores 6, 6. In the example shown in Figure 1, the carcass 2 is made of a single ply of cord layer but it may be composed of two or more plies. The concept of the present invention is applicable to either type of carcass, i.e. whether it is of a radial or bias structure. The belt 3 is positioned radially outward of the carcass 2, and the band 4 is placed further outward of the belt 3. The band 4 may be a full band which totally covers the belt 3 or an edge band which covers only the edges of the belt 3. In the example shown in Figure 1, the two types of band are used in combination.

A bead apex 7 that has a generally triangular tapered cross section and which is made of hard rubber is positioned radially outward of the bead core 6, and the bead apex 7 and the bead core 6 are totally covered with the reinforcing filler 9. The chafer 8 covers entirely the carcass turnup, bead core 6 and bead apex 7 to protect them from chafing against the rim; at the same time, the chafer 8 increases the rigidity of the bead portion 5, thereby insuring improved stability in maneuvering and enhanced endurance.

As described above, the tire of Figure 1 is shown to be furnished with the belt, band, chafer and filler but not all of these components need to included. If desired, some of these reinforcement layers may employ the cord layer 14 fabricated in accordance with the present invention.

As will be understood from the foregoing explanation, the tire of the present invention successfully attains its object by including a reinforcement layer that combines the elasticity, strength and other characteristics of a polyester cord with the good rubber adhesion of a nylon cord. The present invention is described below in greater detail by way of examples.

## EXAMPLES

### Examples 1 and 2

Experimental tires were constructed according to the specifications shown in Table 1, provided that a layer of cords each consisting of organic fiber filaments having a skin-core structure composed of a polyester core and a nylon skin was used in the carcass of a bias light truck and bus tire having the size 7.00 - 15 10PR. The constructed tires were subjected to both an endurance test and a noise test. The results are shown in the bottom columns of Table 1. The tires constructed in Examples 1 and 2 proved to be as durable as the conventional product (Comparative Example 1, using nylon-6,6 cord) and yet it caused less noise. The tire constructed in Comparative Example 2 used the same carcass as in Comparative Example 1 but because of an increased number of breaker plies and thickness of breaker cord, it successfully reduced noise to a level comparable to that for the present invention. However, owing to the increased thickness of breaker ply, the tire temperature elevated during rolling, thus impairing its endurance. Compared to the tire constructed in Comparative Example 3 (using a polyester cord), the tires of Examples 1 and 2 caused the same level of noise but yet they exhibited better endurance.

In Examples 1 and 2, the ratio of polyester to nylon-6,6 in the organic fiber filaments is preferably within the range of 30/70 to 90/10. The filaments preferably have a strength of at least 5 g/d, and their twist coefficient NT given below is preferably within the range of 0.35 - 0.75:

$$NT = N \times \sqrt{0.139 \times D / \rho} \times 10^{-3}$$

where

N:    number of twists/10 cm
D:    total denier of the cord
$\rho$:    the specific gravity of the cord.

If the proportion of polyester in the organic fiber filament is less than 30%, high rigidity which is an inherent feature of polyester will not be attained. If the proportion of polyester exceeds 90%, problems will occur during tire manufacture owing to such phenomena as the development of extremely thin portions of nylon-6,6 and partial exposure of polyester. If the filament strength is less than 5 g/d, the cord thickness must be increased in order to retain strength, which will lead to increased heat generation in the tire and to a heavier tire. If the twist coefficient NT of the filaments is less than 0.35, fatigue resistance of the cord will be impaired to increase the chance of carcass breakage during running. If NT exceeds 0.75, insufficient cord strength and lower rigidity are likely to occur. More desirably, NT is within the range of 0.55 - 0.70.

Example 3

Experimental tires were constructed according to the specifications shown in Table 2, provided that a layer of cords each consisting of organic fiber filaments having a skin-core structure composed of a polyester core and a nylon skin was used in the carcass of a racing radial tire having the size 280/50R13. The constructed tires were subjected to both an endurance test and a maneuverability test. The results are shown in the bottom columns of Table 2. The tire constructed in Example 3 proved to be as durable as the conventional product (Comparative Example 4, using nylon-6,6 cord) and yet it contributed to a shorter lap time. The durability of tire was evaluated in terms of carcass adhesion index as determined after racing. Compared to the tire constructed in Comparative Example 5 (using a polyester cord), the tire of Example 3 gave the same level of lap time but yet it exhibited better endurance.

As in Examples 1 and 2, the organic fiber filaments preferably have a polyester to nylon-6,6 ratio within the range of 30/70 to 90/10, a strength of at least 5 g/d, and a twist coefficient NT in the range of 0.15 - 0.75. If the proportion of polyester is less than 30%, high rigidity which is an inherent feature of polyester is not attainable to realize improved maneuverability. If the proportion of polyester exceeds 90%, problems will occur during tire manufacture owing to such phenomena as the development of extremely thin portions of nylon-6,6 and partial exposure of polyester, which will potentially lead to separation during high-speed running. If the filament strength is less than 5 g/d, carcass strength will become insufficient. If the twist coefficient NT is less than 0.15, fatigue resistance of the cord will become insufficient. If the distance to be traveled is comparatively short as in the case of a preliminary race, NT may be less than 0.15. If NT exceeds 0.75, insufficient cord strength and stiffness will occur, which certainly is not desirable. More desirably, NT is within the range of 0.55 - 0.70.

The test procedures for Example 3 were as follows: the tires were mounted on a racing vehicle which ran on a 6 km outdoor test track, and the lap time was measured; thereafter, the tires were disassembled and the adhesion to carcass was measured.

Examples 4 and 5

Experimental tires were constructed according to the specifications shown in Table 3, provided that a layer of cords each consisting of organic fiber filaments having a skin-core structure composed of a polyester core and a nylon skin was used in the band of a radial high-performance passenger car tire having the size 195/60R14. The constructed tires were subjected to a high-speed endurance test and a belt separation resistance test. Measurements were also conducted for tire uniformity level, which is expressed by an index that provides the overall rating of a specific tire with respect to the amounts of unbalance and runout. The higher the index, the better the tire uniformity. The tire of Example 4 used only an edge band, whereas the tire of Example 5 used both an edge band and a full band. The tire of Comparative Example 6 used an edge band and a full band, each being made of a nylon-6,6 cord. The tire of Comparative Example 7 used an edge band and a full band, each being made of a polyester cord.

The results are shown in the bottom columns of Table 3. The tire of Example 5 performed better than those of Comparative Examples 6 and 7 of the same structure in terms of high-speed endurance, belt separation resistance and uniformity level. Even the tire of Example 4 using only an edge band exhibited a level of high-speed endurance intermediate between those attained by the tires of Comparative Examples 6 and 7 having a more rugged band structure. In the belt separation resistance test, the tire of Example 4 performed as well as those of Example 5 and Comparative Example 6. The tire of Example 4 attained the highest uniformity level of the tires tested.

In Examples 4 and 5, the organic fiber filaments have a polyester to nylon-6,6 ratio within the range of 30/70 to 90/10, and a twist coefficient NT in the range of 0.15 - 0.75. If the proportion of polyester is less than 30%, high rigidity which is an inherent property of polyester is not attainable. Furthermore, thermal shrinkage will increase, thus making it difficult to improve high-speed performance without lowering the uniformity level. If the proportion of polyester exceeds 90%, problems will occur during tire manufacture owing to such phenomena as the development of extremely thin portions of nylon-6,6 and partial exposure of polyester, which will potentially lead to separation during high-speed running. If the twist coefficient NT is less than 0.15, cords will bundle so poorly that cord-to-rubber adhesion is impaired to increase the chance of separation. If NT exceeds 0.75, the cord's rigidity will decrease whereas increased thermal shrinkage will occur.

When a force of 2.25 g/d is exerted upon the organic fiber cords used in Examples 1 - 5 that are removed by disassembling the cured tire, the cords desirably elongate by an amount of 3 - 8%, more desirably 4 - 6%. If cord elongation is less than 3%, the characteristics of the cord are insufficient to enable easy fabrication of the intended cord. If cord elongation exceeds 8%, no better performance than nylon cords is likely to be exhibited.

The present invention may be applied to tire reinforcement layers that will become hot due to heat generation during running or reinforcement layers in the tire that has been subjected to prolonged curing at elevated temperatures, in particular to those reinforcement layers which have conventionally been made of nylon cords, such as carcass, band, breaker, chafer, filler, etc. According to the present invention, increased elastic modulus and decreased thermal shrinkage can be realized without impairing tire endurance which depends upon good adhesion between rubber and the reinforcement layer. As a consequence, improvements can be attained in various aspects such as quietness, stability in maneuvering, flatspot resistance, and uniformity level.

In addition, reinforcement layers of the types described above which have conventionally been made of polyester cords can be modified to have improved adhesion to rubber under high-temperature conditions, and this enables the tire endurance to be improved without sacrificing other performance characteristics.

TABLE 1

| | | Example 1 | Example 2 | Comparative Example 1 | Comparative Example 2 | Comparative Example 3 |
|---|---|---|---|---|---|---|
| Tire size | | 7.00 - 15   10PR | | | | |
| Carcass | Organic fiber material | skin-core structure | skin-core structure | conventional | conventional | conventional |
| | Polyester | 75% | 50% | – | – | 100% |
| | Nylon-6,6 | 25% | 50% | 100% | 100% | – |
| | Cord thickness | 1500d/2 | 1500d/2 | 1200d/2 | 1200d/2 | 1500d/2 |
| | Number of plies | 6 | 6 | 6 | 6 | 6 |
| | Number of picks (1/5 cm) | 41 | 41 | 44 | 44 | 41 |
| | Cord characteristics<br>Cord strength | 6.2 g/d | 6.2 g/d | 8.1 g/d | 8.1 g/d | 6.2 g/d |
| | Elongation under load of 2.25 g/d | 5.1% | 6.2% | 9.0% | 9.0% | 5.1% |
| | Shrinkage upon exposure to dry heat at 180°C | 4.1% | 5.3% | 5.4% | 5.4% | 3.7% |
| | Twist coefficient, NT | 0.68 | 0.68 | 0.65 | 0.65 | 0.68 |
| Breaker | Material | nylon-6,6 | nylon-6,6 | nylon-6,6 | nylon-6,6 | nylon-6,6 |
| | Cord thickness | 840d/2 | 840d/2 | 840d/2 | 1260d/2 | 840d/2 |
| | Number of plies | 1 | 1 | 1 | 3 | 1 |
| | Number of picks (1/5 cm) | 24 | 24 | 24 | 45 | 24 |
| High-speed endurance* | | 190 km/h | 190 km/h | 190 km/h | 180 km/h | 160 km/h |
| Coasting noise** | | 68.7 dB(A) | 69.2 dB(A) | 70.0 dB(A) | 68.9 dB(A) | 68.4 dB(A) |

Note 1:   *In accordance with the high-speed endurance test on light truck tires (<15 in) described in JIS D 4230, the tire was rotated at the specified speed and thereafter, with the speed raised under the condition of 10 km/h/30 min, the test was continued until the tire bursted, and the speed at failure was measured.
**Noise level at 50 km/h was measured in accordance with JASO C-60.  The vehicle was a 2-t car running at full carrying capacity.

Note 2:   For other parameters, the same specifications and patterns were selected.

EP 0 355 822 B1

TABLE 2

| | | | Example 3 | Comparative Example 4 | Comparative Example 5 |
|---|---|---|---|---|---|
| Tire size | | | 280 / 50R13 | | |
| Carcass | | Organic fiber material | skin-core structure | conventional | conventional |
| | | Polyester | 75% | – | 100% |
| | | Nylon-6,6 | 25% | 100% | – |
| | | Cord thickness | 1500d/2 | 1260d/2 | 1500d/2 |
| | | Number of plies | 2 | 2 | 2 |
| | | Number of picks (1/5 cm) | 32 | 32 | 32 |
| | | Cord characteristics | | | |
| | | Cord strength | 6.2 g/d | 8.2 g/d | 6.2 g/d |
| | | Elongation under load of 2.25 g/d | 5.7% | 9.1% | 4.3% |
| | | Twist coefficient, NT | 0.65 | 0.65 | 0.65 |
| Belt | | Material | aramid | aramid | aramid |
| | | Cord thickness | 1500d/2 | 1500d/2 | 1500d/2 |
| | | Number of plies | 2 | 2 | 2 |
| | | Number of picks (1/5 cm) | 39 | 39 | 39 |
| Lap time | | | 1'22"71 | 1'23"11 | 1'22"62 |
| Drive feeling | | | high grip, good traction | high grip, but insufficient side stiffness | high grip, good traction |
| Carcass adhesion index after racing | | | 97 | 100 | 90 |

EP 0 355 822 B1

TABLE 3

| | | Example 4 | Example 5 | Comparative Example 6 | Comparative Example 7 |
|---|---|---|---|---|---|
| Tire size | | 195/60R14 | | | |
| Carcass | Organic fiber material | polyester | polyester | polyester | polyester |
| | Cord thickness | 1000d/2 | 1000d/2 | 1000d/2 | 1000d/2 |
| | Number of plies | 2 | 2 | 2 | 2 |
| | Number of picks (1/5 cm) | 32 | 32 | 32 | 32 |
| Belt | Material | steel | steel | steel | steel |
| | Cord thickness | 1×5/0.23 | 1×5/0.23 | 1×5/0.23 | 1×5/0.23 |
| | Number of plies | 2 | 2 | 2 | 2 |
| | Number of picks (1/5 cm) | 38 | 38 | 38 | 38 |
| Band | Construction | single edge band | one each of edge and full bands | one each of edge and full bands | one each of edge and full bands |
| | Organic fiber material | skin-core structure | skin-core structure | conventional | conventional |
| |   Polyester | 75% | 75% | - | 100% |
| |   Nylon-6,6 | 25% | 25% | 100% | - |
| | Cord thickness | 1000d/2 | 1000d/2 | 840d/2 | 1000d/2 |
| | Number of picks (1/5 cm) | 50 | 50 | 50 | 50 |
| | Cord characteristics | | | | |
| |   Cord strength | 6.4g/d | 6.4g/d | 8.1g/d | 6.2g/d |
| |   Elongation under load of 2.25 g/d | 6.3% | 6.1% | 9.5% | 5.8% |
| |   Twist coefficient, NT | 0.60 | 0.60 | 0.65 | 0.65 |
| Uniformity level | | 130 | 120 | 100 | 120 |
| High-speed endurance* | | 280 km/h | 300 km/h | 270 km/h | 290 km/h |
| Belt separation resistance** | | 100 | 100 | 100 | 80 |

Notes:

* In accordance with the high-speed endurance test described in JIS D 4230, the tire was rotated at the specified speed and thereafter, with the speed raised under the condition of 10 km/h/30 min, the test was continued until the tire bursted, and the speed at failure was measured.

** The tire was rotated on a drum with studded projections under the condition in compliance with the final step of the endurance test described in JIS D 4230, and the time required for the tire to burst was measured and indicated in relative terms, with the value for Comparative Example 6 being taken as 100.

## Claims

1. A tire (1) for a motor vehicle wheel comprising at least a pair of beads (5), a carcass (2) therebetween and a tread portion on the outer periphery of the carcass, the carcass (2) comprising a plurality of tire cords (13), each tire cord comprising a plurality of filaments (10), wherein each filament comprises a core (11) formed of polyester and a sheath (12) formed of nylon, the weight ratio of the polyester in the core to the nylon in the sheath being in the range of from 30:70 to 90:10, each filament (10) having a strength of at least 5 g/d, the cords (13) elongating by an amount of 3-8 % when a force of 2.25 g/d is exerted upon the cords (13), the filaments (10) being twisted into the cords (13), each cord (13) having a twist coefficient NT within the range of 0.15-0.75 satisfying the relationship:

$$NT = N \times \sqrt{0.139 \times D / \rho} \times 10^{-3}$$

where

    N =     number of twists/10 cm
    D =     total denier of the cord; and
    $\rho$ =     the specific gravity of the cord.

2. A tire according to claim 1, particularly for light truck and bus wheels, in which the carcass has a bias structure, and each cord (13) has a twist coefficient NT within the range of 0.35-0.75.

3. A tire according to claim 1, particularly for racing vehicle and high-performance passenger vehicle wheels, in which the carcass has a radial structure, the tire including a belt (3) radially inwardly of the tread portion.

4. A tire (1) for a motor vehicle wheel having a radial structure, particularly for high-performance passenger vehicle wheels, comprising at least a pair of beads (5), a carcass (2) therebetween a tread portion on the outer periphery of the carcass, and a band (4) positioned between a belt (3) and the tread portion, the band (4) comprising a plurality of tire cords (13), each tire cord comprising a plurality of filaments (10), wherein each filament (10) comprises a core (11) formed of polyester and a sheath (12) formed of nylon, the weight ratio of the polyester in the core to the nylon in the sheath being in the range of from 30:70 to 90:10, each filament having a strength of at least 5 g/d, the cords (13) elongating by an amount of 3-8 % when a force of 2.25 g/d is exerted upon the cords, the filaments (10) being twisted into the cords (13), each cord (13) having a twist coefficient NT within the range of 0.15-0.75 satisfying the relationship $NT = N \times \sqrt{0.139 \times D / \rho} \times 10^{-3}$

where

    N =     number of twists/10 cm
    D =     total denier of the cord; and
    $\rho$ =     the specific gravity of the cord.

5. A tire according to one of Claims 1 to 4 in which the skin of each filament (10) is made of nylon 6,6.

6. A tire according to Claim 4 in which the carcass (2) is reinforced by at least one ply of a cord layer (14) in which each cord (13) comprises said filaments (10).

**Patentansprüche**

1. Reifen (1) für ein Motorfahrzeugrad, umfassend wenigstens ein Paar von Wulsten (5), eine Karkasse (2) hierzwischen und einen Laufflächenabschnitt auf dem äußeren Umfang der Karkasse, wobei die Karkasse (2) eine Vielzahl von Reifenkorden (13) umfaßt, jeder Reifenkord eine Vielzahl von Fäden (10) umfaßt, worin jeder Faden einen aus Polyester gebildeten Kern (11) und eine aus Nylon gebildete Hülle (12) umfaßt, wobei das Gewichtsverhältnis des Polyesters im Kern zu dem Nylon in der Hülle in dem Bereich von 30 : 70 bis 90 : 10 liegt, jeder Faden (10) eine Festigkeit von wenigstens 5 g/d besitzt, die Korde (13) sich um einen Betrag von 3 - 8 % bei Anlegen einer Kraft von 2,25 g/d an die Korde (13) dehnen, die Fäden (10) zu den Korden (13) verdrillt sind, jeder Kord (13) einen Verdrillungskoeffizienten NT in dem Bereich von 0,15 - 0,75 aufweist, der die Beziehung erfüllt:

$$NT = N \times \sqrt{0,139 \times D / \rho} \times 10^{-3}$$

EP 0 355 822 B1

worin:

    N =     Anzahl der Verdrillungen / 10 cm

    D =     Gesamtdenierzahl des Kordes; und

    $\rho$ =     spezifisches Gewicht des Kordes.

2. Reifen nach Anspruch 1, insbesondere für Räder von Leichtlastkraftwagen und Bussen, in welchem die Karkasse eine Diagonalstruktur hat, und jeder Kord (13) einen Verdrillungskoeffizienten NT innerhalb des Bereiches von 0,35 - 0,75 hat.

3. Reifen nach Anspruch 1, insbesondere für Räder von Rennfahrzeugen und Hochleistungs-Passagierfahrzeugen, in welchem die Karkasse eine Radialstruktur hat, und der Reifen einen Gürtel (3) radial einwärts von dem Laufflächenabschnitt einschließt.

4. Reifen (1) für ein Motorfahrzeugrad mit einer Radialstruktur, insbesondere für Räder von Hochleistungs-Passagierfahrzeugen, umfassend wenigstens ein Paar von Wulsten (5), eine Karkasse (2) hierzwischen, einen Laufflächenabschnitt auf dem äußeren Umfang der Karkasse und eine zwischen einem Gürtel (3) und dem Laufflächenabschnitt angeordnete Bandage (4), wobei die Bandage (4) eine Vielzahl von Reifenkorden (13) umfaßt, jeder Reifenkord eine Vielzahl von Fäden (10) umfaßt, worin jeder Faden (10) einen aus Polyester gebildeten Kern (11) und eine aus Nylon gebildete Hülle (12) umfaßt, wobei das Gewichtsverhältnis des Polyesters im Kern zu dem Nylon in der Hülle in dem Bereich von 30 : 70 bis 90 : 10 liegt, jeder Faden eine Festigkeit von wenigstens 5 g/d besitzt, die Korde (13) sich um einen Betrag von 3 - 8 % bei Anlegen einer Kraft von 2,25 g/d an die Korde dehnen, die Fäden (10) zu den Korden (13) verdrillt sind, jeder Kord (13) einen Verdrillungskoeffizienten NT in dem Bereich von 0,15 - 0,75 aufweist, der die Beziehung erfüllt:

$$NT = N \times \sqrt{0{,}139 \times D / \rho} \times 10^{-3}$$

worin:

    N =     Anzahl der Verdrillungen / 10 cm

    D =     Gesamtdenierzahl des Kordes; und

    $\rho$ =     spezifisches Gewicht des Kordes.

5. Reifen nach einem der Ansprüche 1 bis 4, in welchem die Haut eines jeden Fadens (10) aus Nylon 6,6 hergestellt ist.

6. Reifen nach Anspruch 4, in welchem die Karkasse (2) durch wenigstens eine Lage einer Kordschicht (14) verstärkt ist, in der jeder Kord (13) diese Fäden (10) umfaßt.

**Revendications**

1. Pneumatique (1) pour roue d'un véhicule automobile, comprenant au moins une paire de talons (5), une carcasse (2) entre ceux-ci et une partie formant bande de roulement à la périphérie extérieure de la carcasse, la carcasse (2) comprenant une pluralité de câblés (13), chaque câblé comprenant une pluralité de filaments (10), dans lequel chaque filament comprend une âme (11) formée de polyester et une gaine (12) formée de nylon, le rapport en poids entre le polyester dans l'âme et le nylon dans la gaine étant dans la plage de 30:70 à 90:10, chaque filament (10) ayant une résistance d'au moins 5 g/d, les câblés (13) s'allongeant d'une valeur de 3 à 8 % lorsqu'on exerce une force de 2,25 g/d sur les câblés (13), les filaments (10) étant rassemblés par torsion pour former les câblés (13), chaque câblé ayant un coefficient de torsion NT compris dans la plage de 0,15 à 0,75 et satisfaisant la relation:

$$NT = N \times (0{,}139 \times D / \rho )^{\frac{1}{2}} \times 10^{-3}$$

où

    N est     le nombre de torsions / 10 cm

    D est     le nombre de deniers total du câblé, et

    $\rho$ est     la densité spécifique du câblé.

2. Pneumatique selon la revendication 1, en particulier pour véhicules utilitaires légers et autobus, dans

11

lequel la carcasse a une structure diagonale, et chaque câblé (13) a un coefficient de torsion NT dans la plage de 0,35 à 0,75.

3. Pneumatique selon la revendication 1, en particulier pour véhicules de course et pour roues à hautes performances pour voitures particulières, dans lequel la carcasse a une structure radiale, le pneumatique comprenant une ceinture (3) radialement à l'intérieur de la partie formant bande de roulement.

4. Pneumatique (1) pour roue de véhicule automobile ayant une structure radiale, en particulier pour roues à hautes performances pour voitures particulières, comprenant une paire de talons (5), une carcasse (2) entre ceux-ci, une partie de bande de roulement à la périphérie extérieure de la carcasse, et une bande (4) placée entre une ceinture (3) et la partie de bande de roulement, la bande (4) comprenant une pluralité de câblés (13), chaque câblé comprenant une pluralité de filaments (10), dans lequel chaque filament (10) comprend une âme (11) formée de polyester et une gaine (12) formée de nylon, le rapport en poids entre le polyester dans l'âme et le nylon dans la gaine étant dans la plage de 30:70 à 90:10, chaque filament ayant une résistance d'au moins 5 g/d, les câblés (13) s'allongeant d'une valeur de 3 à 8 % lorsqu'on exerce une force de 2,25 g/d sur les câblés, les filaments (10) étant rassemblés par torsion pour former les câblés (13), chaque câblé (13) ayant un coefficient de torsion NT compris dans la plage de 0,15 à 0,75 et satisfaisant la relation:

$$NT = N \times (0,139 \times D / \rho)^{\frac{1}{2}} \times 10^{-3}$$

où

    N est     le nombre de torsions / 10 cm
    D est     le nombre de deniers total du câblé, et
    $\rho$ est     la densité spécifique du câblé.

5. Pneumatique selon l'une des revendications 1 à 4, dans lequel la peau de chaque filament (10) est réalisée en nylon 6,6.

6. Pneumatique selon la revendication 4, dans lequel la carcasse (2) est renforcée par au moins une nappe d'une couche (14) de câblés dans laquelle chaque câblé (13) comprend lesdits filaments (10).

FIG. 1

## FIG. 2

## FIG. 3